# EUROPEAN PATENT APPLICATION

(11) **EP 3 131 185 A1**
(43) Date of publication of application: **15.02.2017**
(21) Application number: 14889046.0
(22) Date of filing: 10.10.2014
(51) Int. Cl.: H02K 7/00, H02K 7/116, B62M 11/14

(54) **ELECTRIC BICYCLE WHEEL HUB MOTOR**

(30) Priority: 11.04.2014 CN 201410146626
(71) Applicant: Suzhou Bafang Electric Motor Science Technology Co. Ltd, Suzhou City 215122 (CN)
(72) Inventor: HE, Xianbing, Suzhou Jiangsu 215122 (CN); WANG, Haihua, Suzhou Jiangsu 215122 (CN); ZHOU, Qi, Suzhou Jiangsu 215122 (CN); DING, Jun, Suzhou Jiangsu 215122 (CN); XU, Dajun, Suzhou Jiangsu 215122 (CN)
(74) Representative: Gulde & Partner
(86) International application number: PCT/CN2014/088276
(87) International publication number: WO 2015/154402

(57) **Abstract**

An electric-bike hub motor comprises a horizontally arranged spindle (1), a hub shell (2) that is rotatably mounted outside the spindle (1), a stator (3) and a rotor (4) that are arranged inside the hub shell (2), and a gear speed reduction mechanism. The stator (3) secured on the spindle (1). The gear speed reduction mechanism comprises a rotor gear (5) that is secured to the rotor (4) and arranged coaxially outside the spindle (1), a planetary carrier (6) that is secured on the spindle (1), a planetary shaft (7) that goes rotatably through the planetary carrier (6). The left planetary gear (8) and a right planetary gear (9) that are secured on the planetary shaft (7), and a sun gear (10) that is secured to the hub shell (2) and arranged coaxially outside the spindle (1), wherein the left planetary gear (8) engages with the rotor gear (5), and the right planetary gear (9) engages with the sun gear (10). The electric-bike hub motor means has a large output torque and internal transmission function.

## Description

### FIELD OF THE INVENTION

The present invention relates to a hub motor, which is applicable to an electromobile, especially an electric bike.

### BACKGROUND OF THE INVENTION

An existing ordinary hub motor generally comprises a spindle, a wound stator, a rotor, a sun gear, a reduction assembly, a hub shell, a planetary reduction mechanism, a unidirectional clutch and other components, referring to Chinese utility model patent No. ZL201220268825.8 for its detailed structure. When the motor is energized to work, the wound stator and the rotor generate power source to drive the rotor to rotate, and the rotor gear on the rotor drives the planetary reduction system and the unidirectional clutch to rotate, which transmit torque to the hub directly via an inner gear ring secured on the hub to make the hub rotate. The planetary reduction mechanism used in such a hub motor has shortcomings of small reduction ratio and output torque.

Besides, a traditional hub motor, limited by its function and structure, can only be used in conjunction with an external gearbox, has complex appearance, is unesthetic, has interior space unreasonably used, cannot be implanted into an internal transmission system to better drive the electric bike.

### CONTENTS OF THE INVENTION

A purpose of the present invention is to provide a hub motor that has a large output torque and an internal transmission function, so as to solve the above problems.

A technical solution of the present invention is as follows: An electric-bike hub motor is provided, comprising a horizontally arranged spindle, a hub shell that is rotatably mounted outside the spindle, a stator and a rotor arranged inside the hub shell, and a gear speed reduction mechanism, wherein the stator is secured on the spindle; the gear speed reduction mechanism comprises a rotor gear that is secured to the rotor and arranged coaxially outside the spindle, a planetary carrier that is secured on the spindle, a planetary shaft that goes rotatably through the planetary carrier, a left planetary gear and a right planetary gear that are secured on the planetary shaft, and a sun gear that is secured to the hub shell and arranged coaxially outside the spindle, wherein the left planetary gear engages with the rotor gear, and the right planetary gear engages with the sun gear.

Preferably, the sun gear is a unidirectional clutch that has a clutch inner ring and a clutch outer ring locked unidirectionally thereto, wherein the clutch inner ring is secured to the hub shell, and a gear tooth engaging with the right planetary gear is formed on the clutch outer ring.

Preferably, the spindle is rotatably fitted through a bearing with a swivel that is between the clutch inner ring and the spindle; this swivel, whose right end extends out of the hub shell and has a chain wheel, is also provided with at least one swivel gear that can be rotated circumferentially around the swivel but cannot be moved axially, with the swivel gears different in diameter; besides, a locking mechanism is further provided between the swivel and the swivel gear that can secure them both together circumferentially, and a booster planetary gear engaging with the swivel gear is also secured on the planetary shaft.

Preferably, the locking mechanism comprises a sliding bush that can be slidably sleeved axially on the spindle, and a sliding positioning means that is used to drive the sliding bush to slide axially on the spindle and can position the sliding bush axially on the spindle, with the sliding bush located in the swivel; the swivel is provided in a position corresponding to the clutch inner ring and each of the swivel gears with a corresponding radial through hole, where a leaf spring locked on the swivel is provided; the leaf spring is provided outside with a roller that is locked thereto, and is provided inside with a ball that is located in the radial through hole and can be moved radially along the same, with the swivel gear and the clutch inner ring both provided with a fit groove corresponding to the roller; the sliding bush is provided with a rim that, when the sliding bush is slid axially on the spindle, can be moved outward along the radial through hole by abutting the ball and then press the leaf spring to deform it, such that the roller secured on the leaf spring is moved into the fit groove, thereby making the swivel gear or the clutch inner ring secured to the swivel circumferentially.

Preferably, the sliding positioning means comprises a setting bolt spring sleeved on the spindle and sandwiched between the spindle and the sliding bush, a central axle hole provided on the spindle, a thimble arranged in the central axle hole and connected with the sliding bush, and a paddle that is fitted in contact with the thimble and used for toggling the thimble to make it move axially in the central axle hole, with the paddle connected in transmission with a gear change hand lever on the electric-bike handlebar through a transmission line.

Preferably, the sliding positioning means is an electromagnetic valve.

Preferably, between the sliding bush and the spindle is provided a supporting bearing, which has relatively rotatable bearing inner ring and bearing outer ring, the sliding bush being secured to the bearing outer ring, the bearing inner ring being axially slidably sleeved on the spindle.

Preferably, between the sliding bush and the spindle is provided a supporting bearing, which has relatively rotatable bearing inner ring and bearing outer ring, the sliding bush being axially slidably sleeved on the bearing outer ring, the bearing inner ring being secured on the spindle.

Preferably, there are two swivel gears in all, which are different in diameter.

Preferably, the left planetary gear is mounted on the planetary shaft through a planetary gear unidirectional clutch, which comprises a planetary gear clutch inner ring and a planetary gear clutch outer ring locked thereto unidirectionally, wherein the planetary gear clutch inner ring is secured to the planetary shaft, and the planetary gear clutch outer ring is secured to the left planetary gear.

The present invention has the following advantages:
1. The hub motor of the present invention adopts the gear speed reduction mechanism that can achieve multi-stage reduction of the rotor gear-the left planetary gear, the left planetary gear-the right planetary gear, and the right planetary gear-the sun gear, making this gear speed reduction mechanism have a very big reduction ratio, greatly increasing the output torque of the hub motor to the bike hub.
2. For the hub motor of the present invention, when the motor is energized to work, a cyclist can also provide the impetus for the operation of the motor by pedaling a bike pedal, with the amount of the artificial impetus adjustable.
3. For the hub motor of the present invention, when the motor is powered off to leave the bike in the riding state, the cyclist can also drive the hub to rotate forward by pedaling the bike pedal, with the amount of the artificial impetus adjustable.

In summary, the present invention utilizes the optimized motor structure and performance advantages to design an internal transmission system having the multi-stage transmission function within the hub shell, which system can ensure that the engine and the hub have the same steering and allow free shift, combining the advantages of the internal transmission system and the hub motor cleverly. When the hub motor is not needed to work, the gear change hand lever can be adjusted manually to shift, so as to achieve the light, smooth and fast transmission function of a traditional variable speed bike. When the hub motor is energized for normal work, adjusting the gear change hand lever on the handlebar to shift can enhance the cycling felling, and make the cyclist feel relaxed and comfortable especially when cycling over a hill or a bridge, against the wind, or with a load, while reducing the physical consumption. Meanwhile, the internal transmission system is designed to be inside the hub motor, such that the materials and space have been greatly saved, the manufacturing cost is reduced, and the appearance is simple and beautiful.

### BRIEF DESCRIPTION OF THE DRAWINGS

The present invention will be further described below with reference to drawings and examples.
Fig. 1 is a structural schematic view of the electric-bike hub motor in an example of the present invention;
Fig. 2 is a structural schematic view of parts of the electric-bike hub motor in an example of the present invention; and
Fig. 3 is another structural schematic view of parts of the electric-bike hub motor in an example of the present invention.

List of reference numbers: 1. A spindle; 2. a hub shell; 2a. a shell body; 2b. a shell end cover; 3. a stator; 4. a rotor; 5. a rotor gear; 6. a planetary carrier; 7. a planetary shaft; 8. a left planetary gear; 9. a right planetary gear; 10. a sun gear; 10a. a clutch inner ring; 10b. a clutch outer ring; 10c. a gear tooth; 11. a swivel; 12. a chain wheel; 13. a swivel gear; 14. a sliding bush; 14a. a rim; 15. a roller; 16. a thimble; 17. a setting bolt spring; 18. a central axle hole; 19. a supporting ball; 20. a booster planetary gear; 21. a planetary gear unidirectional clutch; 22. a leaf spring; and 23. a ball.

### DETAILED DESCRIPTION OF THE EMBODIMENTS

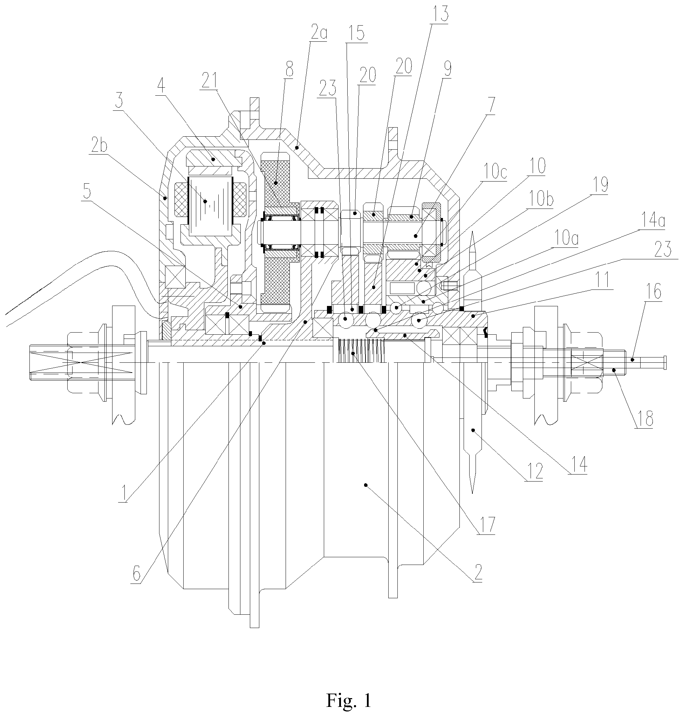

Fig. 1 shows a particular example of the electric-bike hub motor of the present invention, which includes a horizontally arranged spindle 1 provided with a hub shell 2, with the hub shell 2 able to be rotated around this spindle through a bearing (not labeled in the drawing) and composed of a shell body 2a and a shell end cover 2b secured to each other. The hub shell 2 is provided inside with a stator 3, a rotor 4 and a gear speed reduction mechanism, wherein the stator is secured on the spindle 1, with an outer-rotor inner-stator structure adopted in this example.

The first major key improvement of this example is that the gear speed reduction mechanism is totally different from a traditional one in structure, which is specifically as follows:

The gear speed reduction mechanism in this example is mainly composed of a rotor gear 5, a planetary carrier 6, a planetary shaft 7, a left planetary gear 8, a right planetary gear 9 and a sun gear 10. Wherein the rotor gear 5 is rotatably coaxially sleeved on the spindle 1 and secured to the rotor 4, with a bearing (not labeled in the drawing) provided between the rotor gear 5 and the spindle 1 for supporting. The planetary carrier 6 is secured on the spindle 1, and the planetary shaft 7, disposed in parallel with the spindle 1, goes rotatably through the planetary carrier 6 through a bearing (not labeled in the drawing). There may be one or more planetary shafts 7, with three planetary shafts (only one being visible in the drawing) in this example. With the left planetary gear 8 and the right planetary gear 9 equal to the planetary shaft 7 in number, in order to increase the reduction ratio and the output torque, the left planetary gear 8 is generally greater than the right planetary gear 9 in diameter, and the left planetary gear 8 and the right planetary gear 9 are both secured (including being integrally secured) on the planetary shaft 7. The sun gear 10 is rotatably coaxially sleeved on the spindle 1 and secured to the hub shell 2. The left planetary gear 8 engages with the rotor gear 5, and the right planetary gear 9 engages with the sun gear 10.

While in operation, the motor is energized to make the rotor rotate clockwise in the right viewing direction shown in Fig. 1, the rotor 4 drives the rotor gear 5 to rotate clockwise around the spindle 1, the rotor gear 5 then drives the left planetary gear 8 engaging therewith to rotate counterclockwise, the left planetary gear 8 then drives the planetary shaft 7 and the right planetary gear 9 to rotate counterclockwise, the right planetary gear 9 then drives the sun gear 10 engaging therewith to rotate clockwise, and the sun gear 10 then drives the hub shell 2 secured thereto to rotate clockwise, thus making the electric-bike hub rotate clockwise forward.

It is easy to see that, the gear speed reduction mechanism in this example can achieve multi-stage reduction of the rotor gear-the left planetary gear, the left planetary gear-the right planetary gear, and the right planetary gear-the sun gear, making this gear speed reduction mechanism have a very big reduction ratio, greatly increasing the output torque of the motor to the bike hub. If the reduction ratio of this gear speed reduction mechanism needs to be further increased, a corresponding reduction transmission means can also be added between the rotor gear 5 and the left planetary gear 8.

In this example, the sun gear 10 is a unidirectional clutch having the existing conventional structure, which includes a clutch inner ring 10a and a clutch outer ring 10b locked unidirectionally thereto, wherein the clutch inner ring 10a is secured to the hub shell 2 (while the clutch outer ring 10b is not connected to the hub shell 2 directly), and a gear tooth 10c engaging with the right planetary gear 9 is formed on the clutch outer ring 10b. Only when the clutch outer ring 10b is rotated clockwise in the right viewing direction shown in Fig. 1, can it drive the clutch inner ring 10a to rotate clockwise therewith synchronously, while the clockwise rotation of the clutch inner ring 10a in the right viewing direction shown in Fig. 1 will not drive the clutch outer ring 10b to rotate. There is the following advantage for the sun gear 10 to have this structure: When the electric bike skids forward (here the hub shell 2 is rotated clockwise in the right viewing direction shown in Fig. 1), the hub shell 2 will not drive the rotor 4 to rotate, which reduces the skidding resistance of the bike.

In order to further reduce the skidding resistance of the electric bike, this example also has the following structure: The left planetary gear 8 is mounted on the planetary shaft 7 through a planetary gear unidirectional clutch 21, which also has the existing conventional structure that includes a planetary gear clutch inner ring (not labeled in the drawing) and a planetary gear clutch outer ring (not labeled in the drawing) locked unidirectionally thereto, wherein the planetary gear clutch inner ring is secured to the planetary shaft 7, and the planetary gear clutch outer ring is secured to the left planetary gear 8. Only when the planetary gear clutch outer ring is rotated counterclockwise in the right viewing direction shown in Fig. 1, can it drive the planetary gear clutch inner ring to rotate counterclockwise therewith synchronously, while the counterclockwise rotation of the planetary gear clutch inner ring in the right viewing direction shown in Fig. 1 will not drive the planetary gear clutch outer ring to rotate.

The second major key improvement of this example is that this hub motor also has a multi-stage booster function and a multi-stage internal transmission function, which are achieved in the following way:

The spindle 1 is rotatably provided through a bearing (not labeled in the drawing) with a swivel 11 between the clutch inner ring 10a and the spindle 1; this swivel 11, whose right end extends out of the hub shell 2 and has a chain wheel 12, is also provided with two swivel gears 13 that can be rotated circumferentially around the swivel but cannot be moved axially and have different diameter, with a locking mechanism also provided between the swivel 11 and the swivel gear 13 that can secure them both together circumferentially; and a booster planetary gear 20 engaging with the swivel gear 13 is also secured on the planetary shaft 7.

It needs to be noted that, the number of the swivel gear 13 is not limited to two, but can also be one, three, four....

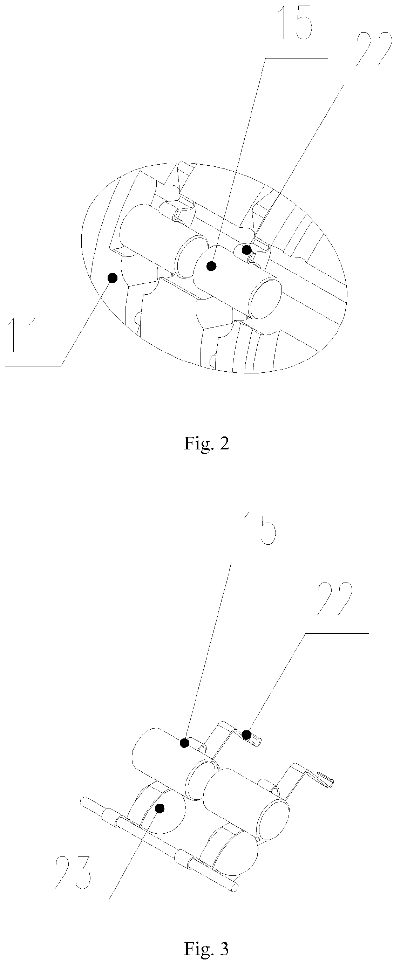

The locking mechanism having the above function can have various structures well known in the mechanical field. In this example, the locking mechanism has the following structure: As shown in Figs. 1 to 3, the locking mechanism comprises a sliding bush 14 sleeved axially slidably on the spindle 1, and a sliding positioning means that is used to drive the sliding bush to slide axially on the spindle and can position the sliding bush axially on the spindle. The sliding bush 14 is located in the swivel 11, which is provided in a position corresponding to the clutch inner ring 10a and each of the swivel gears 13 with a corresponding radial through hole, where a leaf spring 22 locked on the swivel 11 is provided. The leaf spring 22 is provided outside with a roller 15 that is locked thereto, and is provided inside with a ball 23 that is located in the radial through hole and can be moved radially along the same. The swivel gear 13 and the clutch inner ring 10a are both provided with a fit groove corresponding to the roller 15. The sliding bush 14 is provided with a rim 14a that, when the sliding bush is slid axially on the spindle 1, can be moved outward along the radial through hole by abutting the ball 23 and then press the leaf spring 22 to deform it, such that the roller 15 secured on the leaf spring 22 is moved into the fit groove, thereby making the swivel gear or the clutch inner ring secured to the swivel circumferentially.

The sliding positioning means having the above function can have various structures well known in the mechanical field, such as an electromagnetic valve. In this example, the sliding positioning means has the following structure: The sliding positioning means comprises a setting bolt spring 17 sandwiched between the spindle 1 and the sliding bush 14, a central axle hole 18 provided on the spindle 1, a thimble 22 arranged in the central axle hole 18 and connected with the sliding bush 14, and a paddle (not shown in the drawing) that is fitted in contact with the thimble and used for toggling the thimble to make it move axially in the central axle hole 18, with the paddle connected in transmission to a gear change hand lever (not shown in the drawing) on an electric-bike handlebar through a transmission line (not shown in the drawing).

When the motor is energized to drive the hub to rotate clockwise to drive the bike to run forward, a cyclist can operate the gear change hand lever on the handlebar and drive the paddle to act through the transmission line, with the paddle then pushing the thimble 22 to move leftward as shown in Fig. 1 along the central axle hole 18 of the spindle 1, thereby pushing the sliding bush 14 to move quantitatively along the spindle 1; alternatively, under the action of the elastic force of the setting bolt spring 17, the sliding bush 14 and the thimble 16 are pushed to move rightward as shown in Fig. 1 along the central axle hole 18 of the spindle 1. With the quantitative movement of the sliding bush 14 and the rim 14a thereon in a plurality of positions, the ball 23 in any position of the swivel 11 is made to move outward radially (the cyclist can choose himself/herself by controlling the gear change hand lever), and then press the leaf spring 22 to deform it. The leaf spring 22, after being deformed, has a tendency to drive the roller 15 secured thereto to move outward; once the swivel 11 is rotated to a corresponding angular position, the roller 15, under the action of the deforming elastic force of the leaf spring 22, will partially enter the fit groove, with the rest part still in the swivel 11, thus making the corresponding clutch inner ring 10a or a certain swivel gear 13 locked circumferentially to the swivel 11. Certainly, we can also specially set the groove type of the fit groove, so as to allow the outer gear ring to be locked only unidirectionally to the clutch outer ring 10b, with the structure and principle similar to the wedge-type unidirectional clutch and no longer described here in detail. Those balls 23 not in contact with the rim 14a remain in place and will not be moved outward, and the corresponding roller 15 will then not extend into the fit groove, thus not having the circumferential locking function. At this point a cyclist pedals a bike pedal to drive the chain wheel 12 to rotate clockwise in the right viewing direction shown in Fig. 1, and then the chain wheel drives the swivel 11 as well as the swivel gear 13 or the clutch inner ring 10a locked circumferentially to this swivel 11 to rotate clockwise. Wherein the swivel gear 13 can apply to the hub shell 2 the extra clockwise torque in addition to the motor rotor through the booster planetary gear 20 engaging therewith, while the clutch inner ring 10a applies directly to the hub shell 2 the extra clockwise torque in addition to the motor rotor. It is thus clear that whether the cyclist chooses through the gear change hand lever to make the swivel 11 secured circumferentially to the clutch inner ring 10a, or chooses to make the swivel 11 secured circumferentially to a certain swivel gear 13, the cyclist can help the motor rotor 4 drive the hub shell 2 to rotate clockwise by providing the artificial impetus to the motor. Because the respective swivel gears 13 have different diameter, when the cyclist chooses to make the swivel 11 secured circumferentially to the clutch inner ring 10a or the different swivel gears 13, the amount of the artificial impetus provided by the cyclist to this hub motor is then also different, thus achieving the multi-stage booster function of this hub motor.

When this hub motor is powered off to leave the bike in a powered-off riding mode, for the same reason, the cyclist can also operate the gear change hand lever on the handlebar, so as to make the clutch inner ring 10a or a certain swivel gear 13 locked circumferentially to the swivel 11. At this point a cyclist pedals a bike pedal to drive the chain wheel 12 to rotate clockwise in the right viewing direction shown in Fig. 1, and then the chain wheel drives the swivel 11 as well as the swivel gear 13 or the clutch inner ring 10a secured circumferentially to this swivel 11 to rotate clockwise, and then drives the hub shell 2 to rotate clockwise, thus making the bike go forward.

It is thus clear that whether the cyclist chooses through the gear change hand lever to make the swivel 11 secured circumferentially to the clutch inner ring 10a, or chooses to make the swivel 11 secured circumferentially to a certain swivel gear 13, the cyclist can drive the hub shell 2 to go forward clockwise. If the cyclist pedals the pedal at a constant rotational speed, since the respective swivel gears 13 are different in diameter, when the cyclist chooses to make the swivel 11 secured circumferentially to the clutch inner ring 10a or the different swivel gears 13, the rotational speed of the hub shell 2 is then also different, thus achieving the multi-stage internal transmission function of this hub motor. Generally, if a cyclist pursues the forward speed of the bike, the cyclist can choose a gear position where the clutch inner ring 10a is secured circumferentially to the swivel 11; if the cyclist pursues the gradeability of the bike, the cyclist can choose a gear position where the swivel gear 13 having the smallest diameter is secured circumferentially to the swivel 11.

In order to prevent the high-speed sliding friction between the ball 23 and the sliding bush 14 produced due to their direct contact and relative movement during the rotational movement of the swivel 11 and the ball 23 thereon, we can also adopt following structure: Between the sliding bush 14 and the spindle 1 is provided a supporting bearing (not shown in the drawing) having the existing conventional structure, which includes a bearing inner ring and a bearing outer ring that can be rotated relatively, the sliding bush 14 being secured to the bearing outer ring, the bearing inner ring being axially slidably sleeved on the spindle 1. Certainly, the sliding bush 14 can also be axially slidably sleeved on the bearing outer ring, and the bearing inner ring can be secured on the spindle 1, which can also achieve the same effects as above.

In order to ensure the connection strength between the sun gear 10 and the hub shell 2 to prevent deformation of the unidirectional clutch inner ring 10a, a supporting ball 19 is also mounted between the unidirectional clutch inner ring 10a and the swivel 11 in this example.

In this example, the right planetary gear 9 and the booster planetary gear 20 are both smaller than the left planetary gear 8 in diameter.

The words "radial" and "axial" used in this example, in the absence of special note, are both based on the spindle 1 as the reference.

Certainly, the above examples are used only for explaining the technical concept and characteristics of the present invention. They are provided to make people understand and implement the present invention, but do not limit the scope of protection of the present invention. Any equivalent alteration or modification made according to the spiritual essence of the primary technical solution of the present invention should fall within the scope of protection of the present invention.

## Claims

1. An electric-bike hub motor, comprising a horizontally arranged spindle (1), a hub shell (2) that is rotatably mounted outside the spindle (1), a stator (3) and a rotor (4) that are arranged inside the hub shell (2), and a gear speed reduction mechanism, with the stator (3) secured on the spindle (1); **characterized in that**:
the gear speed reduction mechanism comprises a rotor gear (5) that is secured to the rotor (4) and arranged coaxially outside the spindle (1), a planetary carrier (6) that is secured on the spindle (1), a planetary shaft (7) that goes rotatably through the planetary carrier (6), a left planetary gear (8) and a right planetary gear (9) that are secured on the planetary shaft (7), and a sun gear (10) that is secured to the hub shell (2) and arranged coaxially outside the spindle (1), wherein the left planetary gear (8) engages with the rotor gear (5), and the right planetary gear (9) engages with the sun gear (10).

2. The electric-bike hub motor according to claim 1, wherein the sun gear (10) is a unidirectional clutch comprising a clutch inner ring (10a) and a clutch outer ring (10b) locked unidirectionally thereto, wherein the clutch inner ring (10a) is secured to the hub shell (2), and a gear tooth (10c) engaging with the right planetary gear (9) is formed on the clutch outer ring (10b).

3. The electric-bike hub motor according to claim 2, wherein the spindle (1) is rotatably fitted through a bearing with a swivel (11) that is between the clutch inner ring (10a) and the spindle (1); this swivel (11), whose right end extends out of the hub shell (2) and has a chain wheel (12), is further provided with at least one swivel gear (13) that can be rotated circumferentially around the swivel but cannot be moved axially, with the swivel gears (13) different in diameter; besides, a locking mechanism is further provided between the swivel (11) and the swivel gear (13) that can secure them both together circumferentially, and a booster planetary gear (20) engaging with the swivel gear (13) is also secured on the planetary shaft (7).

4. The electric-bike hub motor according to claim 3, wherein the locking mechanism comprises a sliding bush (14) that can be slidably sleeved axially on the spindle (1), and a sliding positioning means that is used to drive the sliding bush to slide axially on the spindle and can position the sliding bush axially on the spindle, with the sliding bush (14) located in the swivel (11); the swivel (11) is provided in a position corresponding to the clutch inner ring (10a) and each of the swivel gears (13) with a corresponding radial through hole, where a leaf spring (22) locked on the swivel (11) is provided; the leaf spring (22) is provided outside with a roller (15) that is locked thereto, and is provided inside with a ball (23) that is located in the radial through hole and can be moved radially along the same; the swivel gear (13) and the clutch inner ring (10a) are both provided with a fit groove corresponding to the roller (15); the sliding bush (14) is provided with a rim (14a) that, when the sliding bush is slid axially on the spindle (1), can be moved outward along the radial through hole by abutting the ball (23) and then press the leaf spring (22) to deform it, such that the roller (15) secured on the leaf spring (22) is moved into the fit groove, thereby making the swivel gear or the clutch inner ring secured to the swivel circumferentially.

5. The electric-bike hub motor according to claim 4, wherein the sliding positioning means comprises a setting bolt spring (17) sleeved on the spindle (1) and sandwiched between the spindle (1) and the sliding bush (14), a central axle hole (18) provided on the spindle (1), a thimble arranged in the central axle hole (18) and connected to the sliding bush (14), and a paddle that is fitted in contact with the thimble and used for toggling the thimble to make it move axially in the central axle hole (18), with the paddle connected in transmission with a gear change hand lever on the electric-bike handlebar through a transmission line.

6. The electric-bike hub motor according to claim 4, wherein the sliding positioning means is an electromagnetic valve.

7. The electric-bike hub motor according to claim 4, 5 or 6, wherein between the sliding bush (14) and the spindle (1) is provided a supporting bearing, which has relatively rotatable bearing inner ring and bearing outer ring, the sliding bush (14) being secured to the bearing outer ring, the bearing inner ring being axially slidably sleeved on the spindle (1).

8. The electric-bike hub motor according to claim 4, 5 or 6, wherein between the sliding bush (14) and the spindle is provided a supporting bearing, which has relatively rotatable bearing inner ring and bearing outer ring, the sliding bush (14) being axially slidably sleeved on the bearing outer ring, the bearing inner ring being secured on the spindle (1).

9. The electric-bike hub motor according to any of claim 4, 5 or 6, wherein there are two swivel gears (13) in all.

10. The electric-bike hub motor according to any of claim 1, 2, 3 or 4, wherein the left planetary gear (8) is mounted on the planetary shaft (7) through a planetary gear unidirectional clutch (21), which comprises a planetary gear clutch inner ring and a planetary gear clutch outer ring locked thereto unidirectionally, wherein the planetary gear clutch inner ring is secured to the planetary shaft (7), and the planetary gear clutch outer ring is secured to the left planetary gear (8).
